# EUROPÄISCHE PATENTSCHRIFT

(11) **EP 0 920 979 B1**
(45) Veröffentlichungstag und Bekanntmachung des Hinweises auf die Patenterteilung: **29.10.2003**
(21) Anmeldenummer: 98122930.5
(22) Anmeldetag: 03.12.1998
(51) Int. Cl.: B29C 69/00

(54) **Verfahren und Spritzgiessform zur Herstellung eines spritzgegossenen Bauelements**
Method and injection mould for producing an injection moulded element
Procédé et moule d'injection pour fabriquer un élément moulé par injection

(30) Priorität: 04.12.1997 DE 19753798
(43) Veröffentlichungstag der Anmeldung: 09.06.1999
(73) Patentinhaber: Hachtel, Friedrich, 73431 Aalen (DE)
(72) Erfinder: Hachtel, Friedrich, 73431 Aalen (DE)
(74) Vertreter: Möbus, Daniela, Dr.-Ing.

(56) Entgegenhaltungen:
- EP-A- 0 293 034
- EP-A- 0 733 464
- DE-A- 2 935 603
- US-A- 2 893 058
- PATENT ABSTRACTS OF JAPAN vol. 98, no. 11, 30. September 1998 & JP 10 175230 A (NISSEI PLASTICS IND CO), 30. Juni 1998

## Beschreibung

Die Erfindung betrifft ein Verfahren und eine Spritzgießform zur Herstellung eines spritzgegossenen Bauelements nach den Oberbegriffen der Ansprüche 1 und 3.

Ein Verfahren gemäß des Oberbegriffs des Anspruchs 1 zur Herstellung einer spritzgegossenen Laufrolle ist aus der DE 196 07 645 der Anmelderin bekannt. Die Laufrolle besteht dabei aus zwei Rollenteilen sowie aus einer Lagerbuchse. Alle drei Teile werden in unterschiedliche Hohlräume der gleichen Spritzgießform gegossen. Anschließend wird die Spritzgießform in axialer Richtung geöffnet und ihre beiden Hälften gegeneinander verdreht, sodass die beiden Rollenteile einander gegenüber zu liegen kommen und durch einen axial beweglichen Teil einer der Spritzgießformhälften aufeinandergepresst und somit zusammenmontiert werden können. Anschließend findet eine weitere Drehung der Gießformhälften statt, sodass sich die gekoppelten Rollenteile und die Lagerbuchse gegenüberstehen und durch Aufdrücken gekoppelt werden können. Nach diesem Verfahren ist somit eine Komplettmontage einer Laufrolle mit einer Lagerbuchse möglich. Erst nach der vollständigen Herstellung wird das fertige Teil ausgeworfen. Dieses bekannte Verfahren lässt sich auch auf andere, aus mindestens zwei Teilen zusammengesetzte Bauelemente anwenden. Es hat sich dabei jedoch gezeigt, dass bei komplizierten Bauelementen mit stark unterschiedlich aufgebauten Teilen eine sehr exakte gegenseitige Positionierung der Bauteile vor dem Verpressen erforderlich ist. Stimmt die gegenseitige Winkellage der beiden Formhälften nicht exakt, so können die Formteile nicht zusammenmontiert werden oder es kann sogar zu Beschädigungen der Formteile kommen.

Aus der EP 0 293 034 A2, der EP 0 733 464 A2 und der DE 29 35 603 A sind jeweils Spritzgießformen bekannt, deren Hälften mittels Zentrierstiften und korrespondierenden Öffnungen vor dem Spritzvorgang zentriert werden. Keine dieser Druckschriften offenbart jedoch um eine Längsachse drehbar angeordnete Formhälften, mit denen je nach Winkelstellung neben dem Spritzen von Formteilen auch eine Montage der Teile möglich ist. Bei den bekannten Spritzgießformen sind außerdem jeweils mindestens zwei Zentrierstifte zur Zentrierung notwendig. Sie sind daher konstruktiv relativ aufwendig.

Der vorliegenden Erfindung liegt die Aufgabe zugrunde, ein Verfahren und eine Vorrichtung vorzuschlagen, mit denen auf konstruktiv einfache Weise ein Montieren von aus unterschiedlichen, gespritzten Teilen zusammengesetzten Bauelementen zuverlässig und ohne Beschädigung der Teile möglich ist.

Die Aufgabe wird mit einem Verfahren der eingangs genannten Art gelöst, das erfindungsgemäß dadurch gekennzeichnet ist, dass eine der beiden Formhälften um eine gemeinsame die beiden Formhälften verbindende Drehachse verdreht wird und an einer der Formhälften der Spritzgießform nur ein Zentrierstift vorgesehen ist, der in eine Zentrieröffnung in der anderen Formhälfte abgesenkt wird, bevor die Formteile gekoppelt werden. Damit ist in jeder Montagestellung der Spritzgießform eine exakte Zentrierung der beiden Spritzgießformhälften und damit der Formteile des Bauelements möglich. Vorteilhafterweise können in der Spritzgießform gleichzeitig die Formteile für mehrere Bauelemente gegossen und montiert werden. Dadurch lässt sich eine besonders rationelle Fertigung erreichen.

Die obenstehende Aufgabe wird gemäß der Erfindung ferner durch die Spritzgießform nach Patentanspruch 3 gelöst.

Zweckmäßige Weiterbildungen der Erfindung sind Gegenstand der abhängigen Ansprüche.

Die Spritzgießform gemäß der Erfindung zur Herstellung eines aus mindestens zwei Formteilen zusammengesetzten Bauelements nach dem erfindungsgemäßen Verfahren ist von zwei in axialer Richtung gegeneinander verfahrbaren und um eine Längsachse relativ zueinander verdrehbaren Formhälften gebildet, die gemeinsam separate Hohlräume für die einzelnen Formteile bilden, wobei diese Hohlräume auf einem Kreis um die Längsachse der Spritzgießform angeordnet sind und wobei mindestens eine der Formhälften einen in axialer Richtung beweglichen Teil zum Montieren der Formteile zu dem Bauelement aufweist, und ist dadurch gekennzeichnet, dass die beiden Formhälften durch eine gemeinsame Drehachse miteinander verbunden sind und dass an einer der Formhälften nur ein Zentrierstift vorgesehen ist, der in eine Zentrieröffnung in der gegenüberliegenden Hälfte vor dem Montieren der Formteile absenkbar ist. Vorzugsweise kann der mindestens eine Zentrierstift und/oder die mindestens eine Zentrieröffnung einen konischen Abschnitt aufweisen, sodass ein Absenken des Zentrierstifts in die Zentrieröffnung auch dann möglich ist, wenn sich die beiden Formhälften nach dem Rotationsvorgang nicht genau gegenüberliegen. Die erfindungsgemäßen Maßnahmen zur Zentrierung der beiden Spritzgießformhälften vor der Montage der einzelnen Formteile schließt die Gefahr einer mangelhaften Montage bzw. einer Beschädigung der Teile des Bauelements aus. Selbst relativ komplizierte und dünnwandige Bauelemente wie beispielsweise Spritzdüsen für Geschirrspülmaschinen können damit problemlos und mit einer hohen Ausbeute gefertigt werden.

Nachfolgend werden anhand der Zeichnung ein erfindungsgemäßes Verfahren zur Herstellung eines Bauelements, hier einer Spritzdüse für Geschirrspülmaschinen, und die dazugehörige Spritzgießform näher erläutert.

Im Einzelnen zeigen:
- Fig. 1: eine Draufsicht auf eine Hälfte einer Spritzgießform;
- Fig. 2: einen zentralen Längsschnitt durch die Spritzgießform nach Fig. 1 vor dem Gießen der Formteile;
- Fig. 3: einen der Fig. 2 entsprechenden zentralen Längsschnitt durch die Spritzgießform vor dem Montieren der gegossenen Formteile.

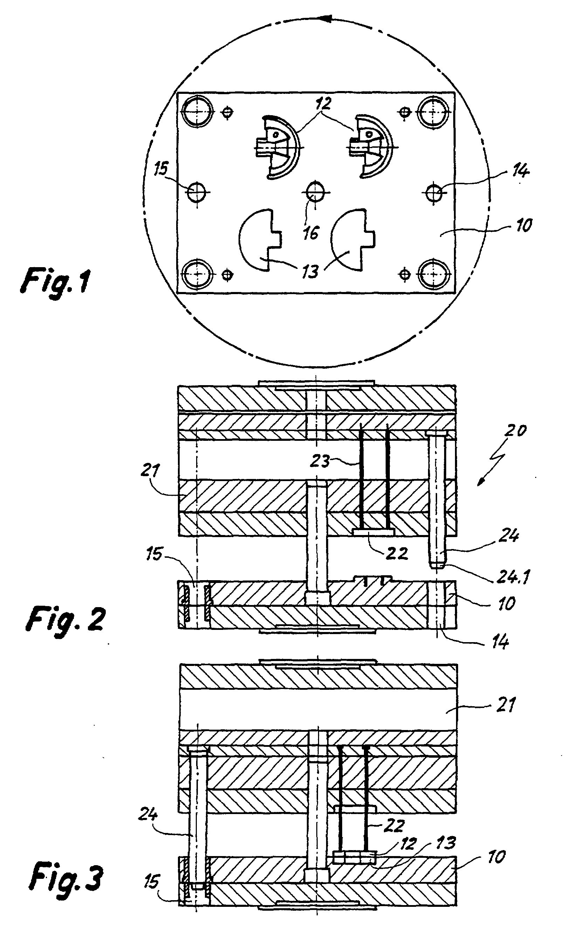

Fig. 1 zeigt eine Spritzgießformhälfte 10, in der zwei identische Vertiefungen zur Herstellung eines erster Formteile 12 und zwei identische Vertiefungen zur Herstellung zweiter Formteile 13 angeordnet sind. Die Spritzgießformhälfte 10 weist außerdem zwei sich gegenüberliegende Zentrierbohrungen 14 und 15 auf. In der Mitte der Formhälfte 10 ist eine Drehachse 16 angeordnet, um die sie rotierbar ist. Fig. 2 zeigt die gesamte Spritzgießform 20, die aus der unteren Hälfte 10 gemäß Fig. 1 und einer oberen Hälfte 21 besteht. An der oberen Spritzgießformhälfte 21 sind ebenfalls Hohlräume zur Fertigung der Formteile 11, 12 angeordnet, wobei in Fig. 2 ein Hohlraum 22 zu sehen ist. Die Formhälfte 21 weist einen in axialer Richtung beweglichen Teil 23 zur Montage der gegossenen Formteile auf. Außerdem ist an der Formhälfte 21 ein Zentrierstift 24 vorgesehen, der in die Zentrierbohrungen 14 bzw. 15 der unteren Spritzgießformhälfte 10 absenkbar ist, wie in Fig. 3 gezeigt ist. Gegenüber der in Fig. 2 gezeigten Stellung ist hier die obere Formhälfe 21 um 180° gegenüber der unteren Formhälfte 10 gedreht worden. Der Zentrierstift 24 ist in die Zentrierbohrung 15 abgesenkt. Außerdem werden die beiden fertig gegossenen Formteile 12, 13 durch den beweglichen Teil 23 der oberen Formhälfte 21 aufeinander gedrückt und dadurch zusammenmontiert. Wie insbesondere aus Fig. 2 ersichtlich ist, weist der Zentrierstift 24 einen konischen Bereich 24.1 auf, sodass er leicht und selbstzentrierend in die Bohrungen 14 und 15 einführbar ist.

## Patentansprüche

1. Verfahren zur Herstellung eines spritzgegossenen Bauelements, das aus mindestens zwei im Aufbau unterschiedlichen Formteilen (12, 13) zusammengesetzt ist, mit den Schritten:
- gleichzeitiges Spritzen der Formteile (12, 13) in gesonderten Hohlräumen in gegenüberliegenden Hälften (10, 21) einer gemeinsamen Spritzgießform (20),
- Öffnen der Spritzgießform (20), wobei ein Formteil (12) an einer Hälfte (20) und der oder die anderen Formteile (13) an der gegenüberliegenden Hälfte (10) der Spritzgießform (20) festgehalten werden,
- Gegeneinanderverdrehen der beiden Spritzgießformhälften (10, 21), sodass sich zwei Formteile (12, 13) des Bauelements gegenüberstehen,
- Kopplung der beiden Formteile (12, 13) durch Aufeinanderdrücken mittels mindestens eines Teils (22) der Spritzgießform (20),
- gegebenenfalls erneutes Gegeneinanderverdrehen der beiden Spritzgießformhälften (10, 21), bis sich die bereits gekoppelten Formteile (12, 13) und ein weiteres Formteil gegenüberstehen und Aufdrücken des weiteren Formteils mittels mindestens eines Spritzgießformteils (22),
**dadurch gekennzeichnet, dass** eine der beiden Formhälften (10, 21) um eine gemeinsame, die beiden Formhälften verbindende Drehachse (16) verdreht wird und dass an einer der Formhälften (10, 21) der Spritzgießform (20) nur ein Zentrierstift (24) vorgesehen ist, der in eine Zentrieröffnung (14, 15) in der anderen Formhälfte abgesenkt wird, bevor die Formteile (12, 13) gekoppelt werden.

2. Verfahren nach Anspruch 1, **dadurch gekennzeichnet, dass** gleichzeitig die Formteile (12, 13) für mehrere Bauelemente in der Spritzgießform gegossen und montiert werden.

3. Spritzgießform zur Herstellung eines aus mindestens zwei Formteilen (12, 13) zusammengesetzten Bauelements nach dem Verfahren gemäß Anspruch 1 oder 2, die von zwei in axialer Richtung gegeneinander verfahrbaren und um eine Längsachse relativ zueinander verdrehbaren Formhälften (10, 21) gebildet ist, die gemeinsam separate Hohlräume für die einzelnen Formteile (12, 13) bilden, wobei diese Hohlräume auf einem Kreis um die Längsachse der Spritzgießform angeordnet sind und wobei mindestens eine der Formhälften (21) einen in axialer Richtung beweglichen Teil (22) zum Montieren der Formteile (12, 13) zu dem Bauelement aufweist, **dadurch gekennzeichnet, dass** die beiden Formhälften (10, 21) durch eine gemeinsame Drehachse (16) miteinander verbunden sind und dass an einer der Formhälften (21) nur ein Zentrierstift (24) vorgesehen ist, der in mindestens eine Zentrieröffnung (14, 15) in der gegenüberliegenden Hälfte (10) vor dem Montieren der Formteile (12, 13) absenkbar ist.

4. Spritzgießform nach Anspruch 3, **dadurch gekennzeichnet, dass** der mindestens eine Zentrierstift (24) und/oder die mindestens eine Zentrieröffnung (14, 15) einen konischen Abschnitt (24.1) aufweisen.

## Claims

1. Method for producing an injection moulded element composed of at least two mould parts (12, 13) of different construction, with the following steps:
- simultaneous injection of the mould parts (12, 13) into separate cavities in opposing halves (10, 21) of a common injection mould (20),
- opening of the injection mould (20), wherein one mould part (12) is secured to one half (20) and the other mould part or parts (13) are secured to the opposing half (10) of the injection mould (20),
- twisting the two injection mould halves (10, 21) in opposite directions so that two mould parts (12, 13) of the element oppose each other,
- coupling of the two mould parts (12, 13) by pressing one on to the other by at least one part (22) of the injection mould (20),
- if necessary, renewed twisting of the two injection mould halves (10, 21) in opposite directions until the mould parts (12, 13) already coupled together and a further mould part oppose each other, and pressing on the further mould part by means of at least one injection mould part (22),
**characterised in that** one of the two mould halves (10, 21) is twisted about a common axis of rotation (16) connecting the two mould halves, and **in that** only one centering pin (24) is provided on one of the mould halves (10, 21) of the injection mould (20), which pin is lowered into a centering opening (14, 15) in the other mould half before the mould parts (12 13) are connected.

2. Method according to claim 1, **characterised in that** the mould parts (12, 13) for several elements are poured into the injection mould and assembled simultaneously.

3. Injection mould for producing an element composed of at least two mould parts (12, 13) according to the method according to claim 1 or 2, which mould is formed from two mould halves (10, 21) that can be moved against each other in the axial direction and can be twisted relative to each other about a longitudinal axis, which halves together form separate cavities for the individual mould parts (12, 13), wherein these cavities are arranged on a circle about the longitudinal axis of the injection mould, and wherein at least one of the mould halves (21) exhibits part (22) that can be moved in the axial direction for assembling the mould parts (12, 13) for the element, **characterised in that** the two mould halves (10, 21) are connected to each other by a common axis of rotation(16), and **in that** only one centering pin (24) is provided on one of the mould halves (21), which pin can be lowered into at least one centering opening (14, 15) in the opposing half (10) before the mould parts (12, 13) are assembled.

4. Injection mould according to claim 3, **characterised in that** at least one centering pin (24) and/or at least one centering opening (14, 15) exhibit a conical section (24.1).

## Revendications

1. Procédé de fabrication d'un composant moulé par injection, qui est composé d'au moins deux parties moulées (12, 13) de construction différente, comportant les étapes suivantes :
- injection simultanée des parties moulées (12, 13) dans des cavités séparées dans des moitiés (10, 21) opposées d'un moule d'injection (20),
- ouverture du moule d'injection (20), une partie moulée (12) étant fixée sur une moitié (20) et l'autre ou les autres parties moulées (13) sur la moitié (10) opposée du moule d'injection (20),
- rotation l'une par rapport à l'autre des deux moitiés (10, 21) du moule d'injection, de manière que deux parties moulées (12, 13) du composant se trouvent en vis-à-vis,
- couplage des deux parties moulées (12, 13) par pression l'une sur l'autre au moyen d'au moins une partie (22) du moule d'injection (20),
- éventuellement nouvelle rotation l'une par rapport à l'autre des deux moitiés (10, 21) du moule d'injection, jusqu'à ce que les parties moulées (12, 13) déjà couplées et une autre partie moulée se trouvent en vis-à-vis, et pression de l'autre partie moulée au moyen d'au moins une partie (22) du moule d'injection,
**caractérisé en ce que** l'une des deux moitiés (10, 21) du moule est tournée autour d'un axe de rotation (16) commun reliant les deux moitiés du moule, et **en ce que** sur l'une des moitiés (10, 21) du moule d'injection (20) un seul doigt de centrage (24) est prévu, celui-ci est abaissé dans une ouverture de centrage (14, 15) de l'autre moitié du moule, avant que les parties (12, 13) du moule ne soient couplées.

2. Procédé selon la revendication 1, **caractérisé en ce que** les parties (12, 13) du moule pour plusieurs composants sont coulées simultanément dans le moule d'injection et montées.

3. Moule d'injection pour la fabrication d'un composant, constitué d'au moins deux parties moulées (12, 13) selon le procédé de la revendication 1 ou 2, qui est formé de deux moitiés de moule (10, 21) déplaçables l'une par rapport à l'autre dans la direction axiale et pouvant tourner l'une par rapport à l'autre autour d'un axe longitudinal, lesquelles forment ensemble des cavités séparées pour les différentes parties moulées (12, 13), ces cavités étant disposées sur un cercle autour de l'axe longitudinal du moule d'injection, et au moins l'une des moitiés (21) du moule comportant une partie (22) déplaçable dans la direction axiale pour le montage des parties moulées (12, 13) pour obtenir le composant, **caractérisé en ce que** les deux moitiés (10, 21) du moule sont reliées entre elles par un axe de rotation (16) commun et **en ce que** sur l'une des moitiés (21) du moule est prévu seulement un doigt de centrage (24), qui est abaissé dans au moins une ouverture de centrage (14, 15) dans l'autre moitié (10) opposée, avant le montage des parties moulées (12, 13).

4. Moule d'injection selon la revendication 3, **caractérisé en ce que** le ou les doigts de centrage (24) et/ou les ouvertures de centrage (14, 15) comportent une portion conique (24.1).
